# EUROPÄISCHE PATENTANMELDUNG

(11) **EP 2 157 536 A2**
(43) Veröffentlichungstag der Anmeldung: **24.02.2010**
(21) Anmeldenummer: 09010313.6
(22) Anmeldetag: 11.08.2009
(51) Int. Cl.: G06Q 10/00

(54) **System zur Überwachung, Steuerung und Datenerfassung technischer Prozesse**

(30) Priorität: 13.08.2008 DE 102008038968
(71) Anmelder: SCHAD GmbH, 22089 Hamburg (DE)
(72) Erfinder: Lenz, Christian, 22397 Hamburg (DE)
(74) Vertreter: Knoop, Philipp

(57) **Zusammenfassung**

Um ein System (1) zur Überwachung, Steuerung und Datenerfassung technischer Prozesse, mit mindestens einer Kommunikationseinheit (12) als Schnittstelle zum bidirektionalen Datenaustausch mit externen Einheiten (2, 3), anzugeben, welches die umfassende Überwachung, Steuerung und Datenerfassung eines technischen Prozesses unter Einbeziehung zusätzlicher, prozessferner Daten ermöglicht, wird vorgeschlagen, dass mindestens eine Kommunikationseinheit (12) zur Kommunikation mit mindestens einer externen elektronischen Prozeßdatenbasis (3) und mindestens eine Kommunikationseinheit (12) zur Kommunikation mit mindestens einer externen technischen Steuereinheiten (2) ausgebildet ist.

## Beschreibung

Die vorliegende Erfindung betrifft ein System zur Überwachung, Steuerung und Datenerfassung technischer Prozesse, mit mindestens einer Kommunikationseinheit als Schnittstelle zum bidirektionalen Datenaustausch mit externen Einheiten.

Die vorliegende Erfindung betrifft gleichermaßen ein Verfahren zur Überwachung, Steuerung und Datenerfassung technischer Prozesse mittels bidirektionalem Datenaustausch mit externen Einheiten.

Ein derartiges System und Verfahren ist als Konzept zur Überwachung und Steuerung technischer Prozesse häufig auch unter dem englischen Begriff Supervisory Control and Data Acquisition (SCADA) bekannt.

Ein SCADA-System der eingangs genannten Art dient dazu, die Installation von prozessnahen Steuerungen zu überwachen und Prozessdaten zu visualisieren. Dabei wird gewöhnlich der größte Teil der eigentlichen Regelung automatisch durch sogenannte Remote Terminal Units (RTU) oder durch speicherprogrammierbare Steuerung (SPS) oder sonstige prozessnahe Automationen durchgeführt. Diese bekannten Systeme bzw. Verfahren dienen dazu, die Funktion der prozessnahen Automation zu optimieren, insbesondere Stellgrößen und Sollwerte vorzugeben bzw. zu empfangen. Meist werden bei den bekannten Systemen und Verfahren der eingangs genannten Art die von dem prozessnahen Geräten empfangenen Daten, etwa Statusinformationen wie zum Beispiel Schalterstellungen, empfangen und dann in einer benutzerfreundlichen Darstellung präsentiert. Dies ermöglicht es dem Benutzer, steuernd in den Prozess einzugreifen.

Die Systeme implementieren typischerweise eine Datenbasis, die Datenpunkte beinhaltet. Ein Datenpunkt enthält beispielsweise einen Ein- oder Ausgangswert, der durch das System überwacht und gesteuert wird. Meist werden im Stand der Technik Datenpunkte als eine Kombination von Werten mit Zeitstempel gehandelt. Eine Serie von Datenpunkten ermöglicht dann die historische Auswertung.

Nachteilig an den bekannten Systemen ist jedoch, dass eine umfassende Überwachung des technischen Prozesses unter Einbeziehung aller relevanten Daten und einem einheitlichen System meist nicht möglich ist. Zum Beispiel liegen viele Daten, die den Prozess charakterisieren, in kaufmännischen Datenbanken, zum Beispiel SAP, vor. Dort können zum Beispiel Daten über abverkaufte Mengen eines Produktes hinterlegt sein. Eine Auswertung der abverkauften Produktmengen ermöglicht aber ebenfalls eine Aussage über beispielsweise den Füllstand eines dieses Produkt speichernden Behälters im Prozess. Außerdem sind technische Daten, wie zum Beispiel Stücklisten, Bestellnummern, Bedienungsanleitungen, ebenfalls herkömmlich in der Regel in separaten Datenbanken gespeichert. Auch diese Größen sind zur umfassenden Überwachung eines technischen Prozesses von Bedeutung.

Es besteht daher ein Bedarf an einem System und Verfahren der eingangs genannten Art, welches die umfassende Überwachung, Steuerung und Datenerfassung eines technischen Prozesses unter Einbeziehung zusätzlicher, prozessferner Daten ermöglicht. Aufgabe der vorliegenden Erfindung ist es daher, ein derartiges System und ein derartiges Verfahren vorzuschlagen.

Erfindungsgemäß wird diese Aufgabe bei einem gattungsgemäßen System dadurch gelöst, dass mindestens eine Kommunikationseinheit zur Kommunikation mit mindestens einer externen elektronischen Prozessdatenbasis und mit mindestens einer Kommunikationseinheit zur Kommunikation mit mindestens einer externen technischen Steuereinheiten ausgebildet ist. Es wird also erfindungsgemäß vorgeschlagen, dass ein herkömmliches SCADA-System derart weitergebildet wird, dass es einen Datenaustausch sowohl mit beispielsweise prozessnahen speicherprogrammierbaren Steuerungen als auch mit externen Datenbanken, etwa SAP-Datenbanken, innerhalb ein und desselben System ermöglicht. Es wird somit nach der Erfindung mit Vorteil eine Zusammenführung der Automatisierungstechnik und der sonstigen Datenbanken erreicht.

In vorteilhafter Ausgestaltung des erfindungsgemäßen Systems ist vorgesehen, dass die Kommunikationseinheit zur Adressierung jeder externen Einheit mittels einer eineindeutigen Kennung ausgebildet ist, wobei Kennungen für Prozessdatenbasen auf deren Primärschlüssel und Kennungen für Steuereinheiten auf eine Speicheradresse verweisend ausgebildet sind. Die Einbindung von externen Datenbanken in das Prozessüberwachungssystem gestaltet sich auf diese Weise besonders günstig.

In vorteilhafter Ausgestaltung der Erfindung ist eine Kommunikationskanaldatenbasis vorhanden, in welcher Kennungen für die Kommunikation mit externen Einheiten abgelegt sind. Hierdurch ist es möglich, vor Beginn der eigentlichen Steuerung und Überwachung eines technischen Prozesses eine Vorbereitung des Systems auf die in der zu überwachenden Anlage tatsächlich vorhandenen SPS-Steuerungen und die zusätzlich auszulesenden Datenbanken vorzunehmen. Während der Steuerung ist dann erfindungsgemäß sichergestellt, dass durch das System nur tatsächlich vorhandene Speicherbereiche in Steuerungen und Datenbanken angesprochen und ausgelesen werden.

Eine Anpassung des Systems an unterschiedliche SPS-Steuerungen verschiedener Hersteller und/oder unterschiedliche Datenbanken wird in vorteilhafter Ausgestaltung der Erfindung ermöglicht, indem die Kommunikationseinheit zur Adressierung von Speicherbereichen auf externen Einheiten nach einem für alle externen Einheiten einheitlichen Format, insbesondere SQL-Format, ausgebildet ist. Im Rahmen der Erfindung können insbesondere auch SQL-ähnliche Formate verwendet werden. Bezüglich der weiteren Signalverarbeitung innerhalb des Systems verhalten sich dann erfindungsgemäß Datenbanken und prozessnahe technische Steuerungen in gleicher Weise.

In bevorzugter Ausgestaltung der Erfindung ist eine Datenstruktur-Datenbasis vorhanden, in welcher Datenstrukturen mit dem System verbindbare externe Einheiten abgelegt sind. In einer derartigen Struktur der Erfindung können in einer gewünschten Detaillierungsstufe beispielsweise die aus einer Steuerung auslesbaren Prozessdaten, deren Format und ähnliches abgelegt sein. Zusätzlich können auch aus einer SPS ausgelesenen Prozessparametern bestimmte Statusmeldungen innerhalb der erfindungsgemäßen Struktur zugeordnet werden.

Um eine Verknüpfung von aus den externen Einheiten verfügbaren Daten mit Strukturinformationen über die Interpretierung dieser Daten sicherzustellen, sind in Ausgestaltung der Erfindung Mittel zur Überprüfung einer Datenkompatibilität, insbesondere hinsichtlich eines Datenformats und/oder einer Datenbreite, zwischen Elementen der Datenstruktur-Datenbasis und Elementen der Kommunikationskanaldatenbasis vorgesehen. Wenn das System eine relationale Datenbasis implementiert, kann eine derartige Kompatibilitätsprüfung, insbesondere über eine Integritätsprüfung der eindeutigen Schlüssel jeder Tabelle, erfolgen. Es lässt sich auf diese Weise mit Vorteil eine Verknüpfung verfügbarer Kommunikationskanäle mit den passenden Datenstrukturen erreichen.

Das System nach der Erfindung wird noch verbessert, wenn eine Verbindungsdatenbasis vorhanden ist, in welcher gewünschte kompatible Paarungen von Elementen der Datenstrukturbasis und Elementen der Kommunikationskanaldatenbasis abgelegt sind. Das System lässt sich dann durch Vorbereitung der Überwachung, Steuerung und Datenerfassung im Vorhinein in geeigneter Weise konfigurieren, sodass während des eigentlichen Überwachungsbetriebs eine Kommunikation nur noch zwischen passenden Strukturen und Kanälen erfolgen kann.

Bei einer bevorzugten Weiterbildung des erfindungsgemäßen Systems ist eine Verknüpfungsdatenbank zum Ablegen von Verknüpfungen zwischen Prozessdaten aus einer Prozessdatenbasis und Prozessdaten aus einer technischen Steuereinheit zum Zwecke der Visualisierung besagter Daten vorgesehen. Zum Beispiel können von einer SPS ausgelesene Daten einer Durchflussmessung gleichzeitig mit in einer SAP-Datenbank abgelegten Abverkaufszahlen dieses Produkts dargestellt werden, um mit Vorteil eine Übersicht über Produktionszugang und Verkaufsabgang zu schaffen.

In Ausgestaltung des erfindungsgemäßen Verfahrens wird jede externe Einheit mittels einer eineindeutigen Kennung adressiert, wobei Kennungen für Prozessdatenbasen aus deren Primärschlüssel und Kennungen für Steuereinheiten aus einer Speicheradresse gebildet werden. Eine einheitliche Verwaltung sowohl von Prozess- als auch von kaufmännischen Daten oder allgemeinen technologischen Daten aus einer Datenbank wird auf diese Weise mit Vorteil erleichtert.

Eine besonders effiziente Ausführung des erfindungsgemäßen Verfahrens sieht vor, dass Kennungen für den Datenaustausch mit externen Einheiten vor Beginn der Überwachung, Steuerung und Datenerfassung in einer Kommunikationskanaldatenbasis abgelegt werden. Erfindungsgemäß ist also vorgesehen, eine Vorkonfiguration des Überwachungssystems vorzunehmen, um im Überwachungsbetrieb mit Hilfe der Kommunikationskanaldatenbasis nur noch "passende", d. h. kompatible, Signale miteinander zu verknüpfen.

Bevorzugt werden nach der Erfindung Speicherbereiche auf externen Einheiten nach einem für alle externen Einheiten einheitlichen Format, insbesondere SQL-Format, adressiert. Im Rahmen der Erfindung können insbesondere auch SQL-ähnliche Formate verwendet werden. Eine vereinheitlichte Ankopplung an Auswerteroutinen wird auf diese Weise ermöglicht. Beispielsweise muss bei einer Konfigurierung von Auswerteroutinen nicht von vornherein berücksichtigt werden, ob diese als Eingangsgröße Werte aus einer Datenbank oder Werte, die aus einer SPS ausgelesen wurden, erhalten soll. Eine Auswertung kann somit modular erstellt und implementiert werden.

In bevorzugter Ausgestaltung des erfindungsgemäßen Verfahrens werden vor einem Datenaustausch Datenstrukturen mit dem System verbindbarer externer Einheiten aus einer Datenstruktur-Datenbasis ausgelesen und vor jedem Datenaustausch wird eine Datenkompatibilität, insbesondere hinsichtlich eines Datenformats und/oder einer Datenbreite , zwischen Elementen in der Datenstruktur-Datenbasis und Elementen einer Kommunikationskanaldatenbasis überprüft, wobei ein Datenaustausch ausschließlich zwischen kompatiblen Elementen durchgeführt wird. Der Ablauf des erfindungsgemäßen Verfahrens in dieser Ausgestaltung ist dann analog zu den Abläufen eines elektrischen Rangierverteilers. Denn es werden quasi Verknüpfungen zwischen vorgegebenen Datenstrukturen und zugehörigen, d. h. kompatiblen, Kommunikationskanälen hergestellt.

Dabei kann ein Kommunikationskanal gleichermaßen entweder mit einer externen Datenbank oder mit einer prozessnahen SPS verbunden sein.

Wenn in anderer Ausgestaltung der Erfindung die Prozessdaten aus mindestens einer externen Prozessdatenbasis und Messdaten aus mindestens einer externen technischen Steuereinheit ausgelesen werden und zur Visualisierung miteinander verknüpft werden, ermöglicht das Verfahren eine umfassende Auswertung und Visualisierung eines technischen Prozesses. Dabei ist die Visualisierung und Auswertung weder auf reine, von SPS ausgelesene Prozessdaten noch auf zum Beispiel rein kaufmännische, in Datenbanken abgelegte Daten beschränkt. Vielmehr kann erfindungsgemäß eine umfassende Auswertung des Systems unter Berücksichtigung dieser beiden, nach Stand der Technik nicht unmittelbar verknüpfbaren Datentypen erfolgen.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: schematische Darstellung einer bevorzugten Ausführungsform eines Datenüberwachungssystems gemäß der Erfindung;
- Figur 2:: schematische Darstellung einer relationalen Datenbankstruktur zur einheitlichen Behandlung von externen Datenbanken und externen SPS nach der Erfindung;
- Figur 2b:: schematische Darstellung des Datenmodell zur Verknüpfung von Kanaldaten mit der Speicheradresse eines externen Gerätes
- Figur 3.1.:: Beispiel einer Datenstruktur für einen Antrieb in seiner technischen Ausprägung als Bestandteil eines erfindungsgemäßen Datenüberwachungssystems;
- Figur 3.2.:: Fortsetzung zu Figur 3.1.;
- Figur 3.3.:: Fortsetzung zu Figur 3.2.;
- Figur 3.4.:: Fortsetzung zu Figur 3.3.;
- Figur 3.5.:: Fortsetzung zu Figur 3.4.;
- Figur 4.1.:: schematische Darstellung einer Datenstruktur einer externen SPS in ihrer hardwaretechnischen Ausprägung als Bestandteil eines erfindungsgemäßen Datenüberwachungssystems, wobei die Darstellung jener der Figuren 3.1. bis 3.5. entspricht;
- Figur 4.2.:: Fortsetzung zu Figur 4.1.;
- Figur 4.3.:: Fortsetzung zu Figur 4.2.;
- Figur 5:: Tabelle zur Veranschaulichung der von dem erfindungsgemäßen Datenüberwachungssystem zugelassenen Verknüpfungen von Parametertypen und Formaten mit einer externen SPS und einer externen Datenbank;
- Figur 6:: (A) tabellarische Übersicht zur Veranschaulichung der erfindungsgemäßen Adressierung eines Speicherbereichs einer Maschinensteuerung, (B) tabellarische Darstellung zur Veranschaulichung der erfindungsgemäßen Adressierung einer externen Datenbank;
- Figur 7:: schematische Darstellung der erfindungsgemäßen Verknüpfung von Datenkanälen mit externen Einheiten (A) am Beispiel eines Datenfelds einer technologischen Datenbank und (B) am Beispiel eines Parameters einer SPS.

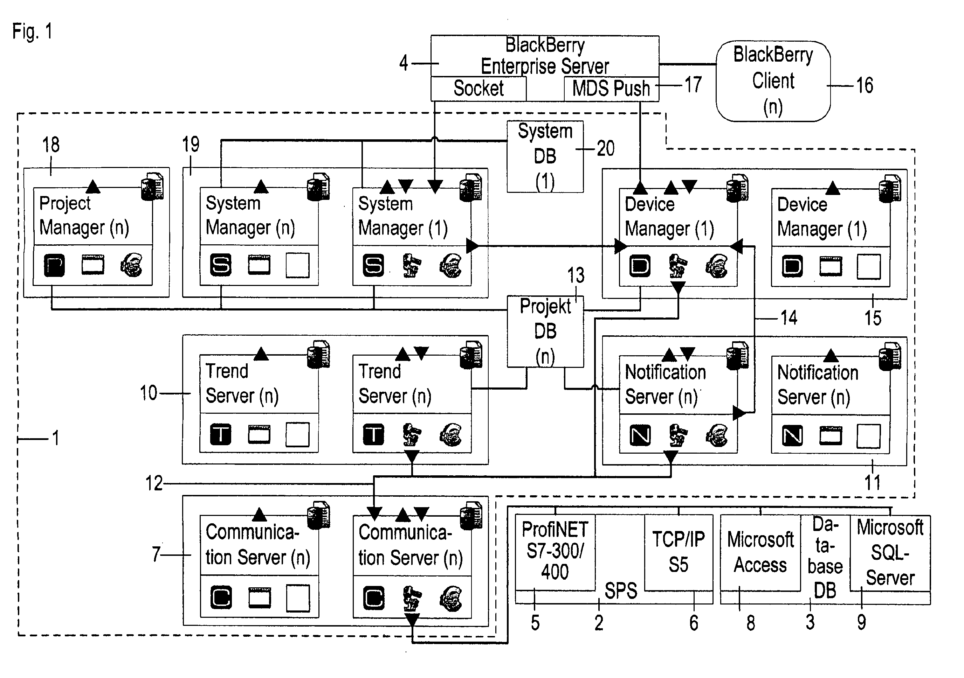

Die Figur 1 zeigt in einer schematischen Übersicht die generelle Architektur eines erfindungsgemäßen Systems zur Überwachung, Steuerung und Datenerfassung nach der Erfindung. Das System wird nachstehend der Einfachheit als Überwachungssystem bezeichnet. Das Überwachungssystem ist allgemein mit dem Bezugszeichen 1 bezeichnet. Die Systemgrenzen sind in der Darstellung mit einer gestrichelten Linie angedeutet.

Das Überwachungssystem 1 ist an eine speicherprogrammierbare Steuerung (SPS) 2, und eine externe Datenbank 3 angeschlossen. Der Fachmann wird erkennen, dass diese beiden externen Einheiten nur exemplarisch zu verstehen sind. In der Praxis ist eine beliebige Anzahl von SPS 2 und/oder Datenbanken 3 an das Überwachungssystem 1 nach der Erfindung einschließbar.

Das Überwachungssystem 1 ist außerdem über einen Blackberry-Dienst 4 zur mobilen Kommunikation mit einem mobilen Endgerät 16 verbunden, wobei das mobile Endgerät 16 als Blackberry-Client eingerichtet ist. Die SPS 2 ist über ein Anlagennetzwerk 5 nach dem Profinet-Standard und einen TCP/IP Dienst 6 an einen Kommunikationsserver 7 des erfindungsgemäßen Überwachungssystems 1 angeschlossen. Der Kommunikationsserver 7 bildet in dieser Weise das Bindeglied zwischen dem erfindungsgemäßen Überwachungssystem 1 und der Automatisierungstechnik, welche mit der SPS 2 in Verbindung steht. Bei verteilten Systemen kann der Kommunikationsserver 7 direkt neben den Automatisierungsgeräten der technischen Anlage aufgebaut werden. Denn der Kommunikationsserver 7 ist gemäß der hier beschriebenen Ausführungsform der Erfindung autark von den anderen Komponenten des Überwachungssystems 1. Insbesondere besteht keine Datenbankanbindung.

Die Datenbank 3 kann zum Beispiel eine SAP-Datenbank oder Microsoft Access Datenbank sein. Die Datenbank 3 ist über eine Datenbankanbindung 8 und einen SQL-Server 9 ebenfalls mit dem Kommunikationsserver 7 des Überwachungssystems 1 verbunden. Die Datenbankanbindungen 8,9 sind nur beispielhaft zu verstehen. Der Fachmann wird erkennen, daß im Rahmen der Erfindung auch andere Möglichkeiten der Datenanbindung an dem Kommunikationsserver bestehen.

Das Überwachungssystems 1 umfasst als weitere wesentliche Komponenten einen Trend-Server 10 und einen Notification-Server 11. Sowohl der Trend-Server 10 als auch der Notification-Server 11 kommuniziert bidirektional mit einer internen Schnittstelle 12 des Communication-Server 7.

Der Trend-Server 10 dient zur Verwaltung der in einem Projekt speziell für den Trend-Server 10 konfigurierten Messwerte. Dazu zeigt der Trend-Server 10 in einem vorgegebenen Zeitintervall einen ermittelten Istwert, der über den Kommunikationsserver 7 von der Datenbank 3 oder der SPS 2 empfangen wurde, in einer Projektdatenbank 13 an. Dabei können vorkonfigurierte Parameter zur Mittelwertbestimmung oder zur Glättung des aus der SPS 2 und/oder Datenbank 3 ausgelesenen Messwerts bei der Istwertbestimmung berücksichtigt werden.

Der Notification-Server 11 verwaltet die in einem dafür vorgesehenen Projekt speziell für den Notification-Server 11 konfigurierten digitalen Meldungen, die über den Communication-Server von der SPS 2 und/oder der Datenbank 3 empfangen wurden. Der Notification-Server dient funktional dazu, beim Eintritt bestimmter Datenereignisse eine Meldung auszugeben. Ein Datenereignis in diesem Sinne kann zum Beispiel ein Flankenwechsel des in Rede stehenden Messwerts sein. Ein derartiger Flankenwechsel wird beispielsweise im Notification-Server 11 durch den Vergleich des Altwerts mit dem Neuwert erhalten. Der Notification-Server 11 erkennt dann eine steigende bzw. fallende Flanke einer Meldung durch einen Wechsel von 0 auf 1 bzw. von 1 auf 0. Um diese Funktion zu erfüllen, liest der Notification-Server 11 des erfindungsgemäßen Überwachungssystems 1 den zugehörigen Speicherbereich der SPS 2 und/oder Datenbank 3 mittels des Communication-Server 7 aus.

Eine vom Notification-Server 11 erzeugte Meldung 14 wird innerhalb des Überwachungssystems 1 an einen Device-Manager-Dienst 15 übermittelt. Der Device-Manager-Dienst 15 ist für die Kommunikation mit mobilen Endgeräten, insbesondere einem Blackberry-Server 4, verantwortlich. Der Device-Manager 15 fungiert somit als Bindeglied zwischen dem erfindungsgemäßen Überwachungssystem 1 und den Blackberry-Endgeräten 16. Ein Datenaustausch zwischen dem Device-Manager 15 und dem Blackberry-Dienst 4 erfolgt insbesondere über einen PUSH-Dienst 17. Dadurch werden vom Notification-Server 11 erzeugte Meldungen 14 über den Device-Manager 15 nach Erstellung unmittelbar auf den Blackberry-Client 16 übermittelt, ohne dass der Blackberry-Client 16 eine Anfrage starten muss.

Ein weiterer wichtiger Dienst des erfindungsgemäßen Überwachungssystems 1 ist der Projektmanager-Dienst 18 sowie der Systemmanager-Dienst 19. Der Systemmanager-Dienst 19 dient im Wesentlichen zur Verbindung mit einer Systemdatenbank, wohingegen der Projektmanager-Dienst 18 im Wesentlichen zur Projektierung und Konfiguration sowie zur Kommunikation mit der Projektdatenbank 13 dient.

In der Systemdatenbank 20 werden die Daten abgelegt, die den projektunabhängigen Rahmen des erfindungsgemäßen Überwachungssystems 1 bilden. Dazu zählen insbesondere sämtliche Systemparameter, eine Übersicht über installierte Module und Projektdatenbanken 13, eine Benutzer-/Endgeräteverwaltung und die zentrale Lizenzierung aller Elemente. Darüber hinaus werden alle Zugriffe und Anfragen von außen in der Systemdatenbank 20 protokolliert.

In der Projektdatenbank 13 werden alle Daten abgelegt, die die Module bezogen auf ein Projekt benötigen, um deren Aufgabe vollständig und ohne weitere Rückfrage bei der Systemdatenbank 20 durchführen zu können. In der Projektdatenbank 13 wird somit eine spezielle Instanz der gemäß Systemdatenbank 20 verfügbaren Elemente im Sinne einer Instanzierung gebildet.

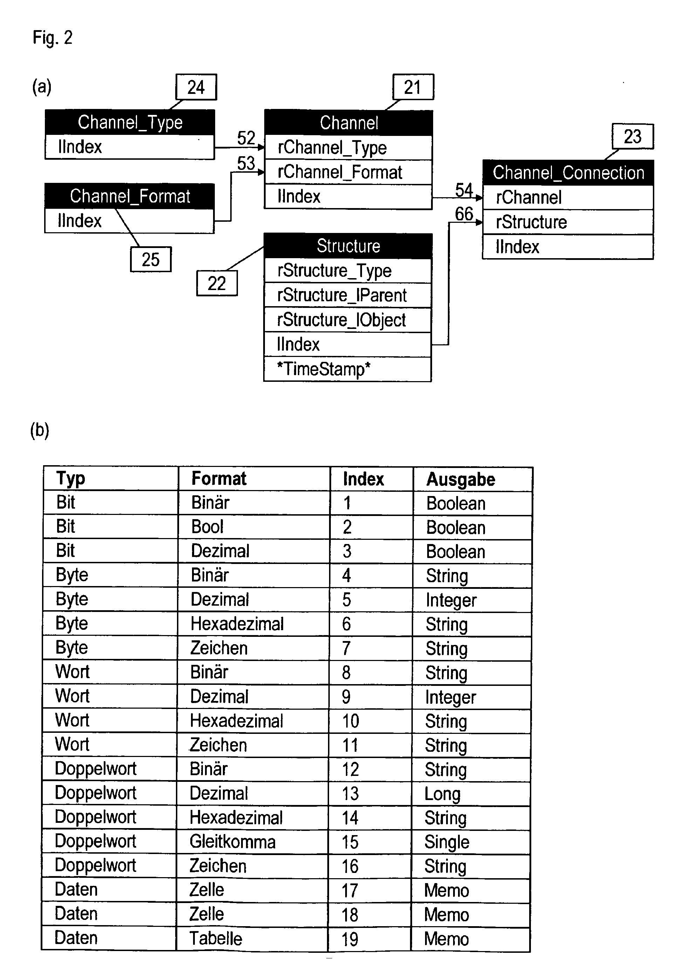

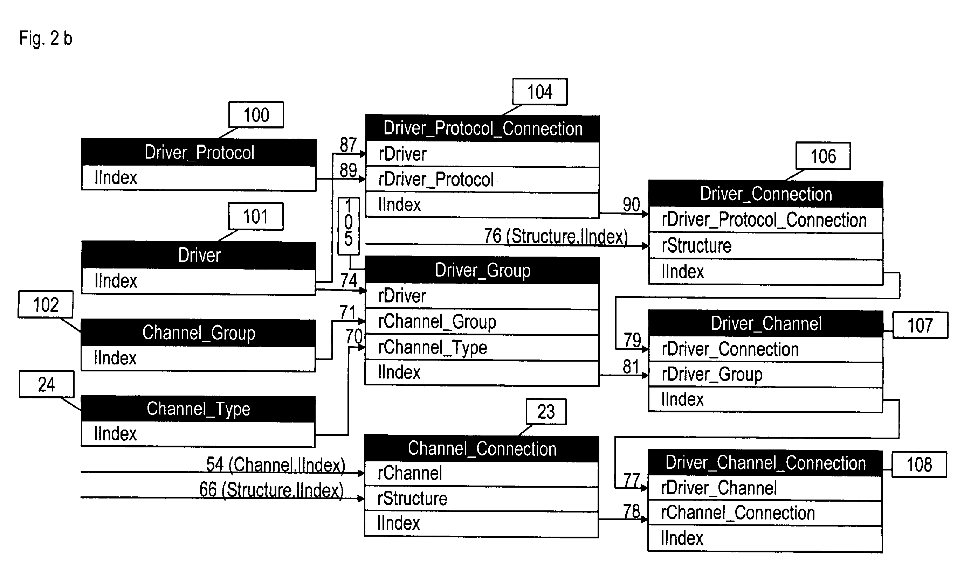

Die Projektdatenbank 13 enthält die für eine erfindungsgemäße vereinheitlichte bidirektionale Kommunikation mit der SPS 2 gleichermaßen wie mit der Datenbank 3 erforderlichen Daten. In Figur 2 ist das prinzipielle Datenmodell einer relationalen Datenbank veranschaulicht, mit welchem erfindungsgemäß sichergestellt ist, dass eine einheitliche Einbindung von externen Datenbanken 3 wie auch externen SPS 2 in das erfindungsgemäße Überwachungssystem 1 möglich ist. Gleichzeitig wird eine Zuordnung miteinander kompatibler Datentypen sichergestellt.

Die in Figur 2(a) gezeigte relationale Datenbank ist in der Projektdatenbank 13 implementiert. Sie umfasst eine Kanaltyptabelle 21 und eine Strukturdatenbank 22. Verknüpfungen von Elementen in der Kanaltyptabelle 21 mit der Strukturdatenbank 22, welche vom Überwachungssystem 1 nach der Erfindung zugelassen werden sollen, sind in einer Kanalverbindungsdatenbank 23 abgelegt.

In der Strukturtabelle 22 werden hierarchisch alle Elemente eines Projektes abgelegt. In der als Verknüpfungstabelle dienenden Kanaltyptabelle 21 sind die verfügbaren Kanaltypen als Kombination aus Datentyp 24 und Datenformat 25 abgelegt. Um einem Strukturelement einen Kanaltyp zuzuordnen, wird diese Information in einer weiteren Verknüpfungstabelle, genannt Kanaldatenbank 23, hinzugefügt. Die Daten dieser Kanaldatenbank 23 werden, wie in Figur 2b veranschaulicht, über die dort gezeigte Verknüpfungstabelle 108 mit der Speicheradresse eines externen Gerätes, d.h. mit einer Datenbank oder einer SPS, verbunden.

Wie diese Speicheradressen einer Datenbank oder SPS in einer Projektdatenbank 13 im einzelnen verwaltet werden, zeigt Fig. 2b.

Die unterschiedlichen mit dem Überwachungssystem 1 verbindbaren Datenbank- und SPS-Typen sind in einer Tabelle 101 definiert. Über welche Methode das Überwachungssystem 1 mit diesen externen Geräten kommunizieren kann, ergibt sich aus der Aufzählung 100 und der Verknüpfung in Tabelle 104. In der Tabelle 104 werden die verfügbaren Treiber externer Geräte 2, 3 verwaltet. Um ein externes Gerät 2, 3 im Projekt tatsächlich einzurichten, wird es als Element in der Strukturdatenbank 22 angelegt und über die Tabelle 106 mit der Treiberauswahl 104 konkretisiert. Die bezogen auf den in der Tabelle 101 abgelegten Gerätetyp verfügbaren Kanalressourcen sind vom Treiber unabhängig und in der Verknüpfungstabelle 105 abgelegt.

Die Kanalressourcen ergeben sich bezogen auf den externen Gerätetyp 2, 3 aus einer Kombination zwischen Kanalgruppe gemäß Tabelle 102, z.B. Eingänge, Merker, Tabelle etc., und Kanaltyp gemäß Tabelle 23.

Diese Kanalressourcen legen den bezogen auf das jeweilige externe Gerät 2, 3 verfügbaren adressierbaren Bereich fest, woraus sich in der Tabelle 107 der adressierte Kanal ergibt .Dieser kann paßgenau mit dem Parameter aus 23 in der Tabelle 108 zu einem adressierbaren Parameter überführt werden.

In der Kanaltyptabelle 21 sind verfügbare Kommunikationskanäle abgelegt zusammen mit Daten betreffend den Kanaltyp und das Kanalformat. Die möglichen Werte für den Kanaltyp bezieht die Kanaltyptabelle 21 aus der über eine 1:n Verknüpfung angehängte Kanaltypdatenbank 24. Mögliche Kanalformate bezieht die Kanaltyptabelle 21 aus der ebenfalls mit einer 1:n Verknüpfung angehängten Kanalformatdatenbank 25.

In Figur 2 (b) ist beispielhaft in einer Tabelle eine mögliche Belegung der Kanaltyptabelle 21 gemäß der Erfindung gezeigt. Es ist ersichtlich, dass in der Spalte mit der Überschrift "Typ" die möglichen Werte aus der Menge Bit, Byte, Wort, Doppelwort, Daten ausgewählt sind. Ebenso ist ersichtlich, dass in der Spalte Format einer der Werte binär, Bool, dezimal, hexadezimal, Zeichen, Gleitkomma, Zelle, Tabelle ausgewählt sind.

Jedem dieser Kanaltypen ist ein eindeutiger Index der entsprechend überschriebenen Spalte zugeordnet. Ein Index beschreibt einen verfügbaren, vordefinierten Kanaltyp eindeutig. Es ist ersichtlich, dass ein Kanal somit gleichermaßen eine Kommunikation mit einer externen SPS 2 definieren kann, wie auch eine Kommunikation mit einer externen Datenbank 3. Die Verwaltung und Adressierung innerhalb des erfindungsgemäßen Überwachungssystems 1 ist dabei vollkommen identisch. Insbesondere liegt kein sogenannter Medienbruch vor, wie dies beim Stand der Technik der Fall ist.

In der Strukturtabelle 22 sind innerhalb eines gegebenen Projektes in einer Ordnerhierarchie Datenstrukturen abgelegt. Die Daten sind hierarchisch erfasst und können in einer Visualisierung in einem Projektbaum angezeigt werden. Innerhalb eines Struktureintrags sind beispielsweise die für einen bestimmten Anlagenteil einer technischen Anlage möglichen und zu überwachenden Zustandsparameter hierarchisch abgelegt. Eine Struktur kann in diesem Sinne sowohl auf einen von der SPS 2 ausgelesenen Wert als auch auf einen aus der Datenbank 3 ausgelesenen Wert Bezug nehmen.

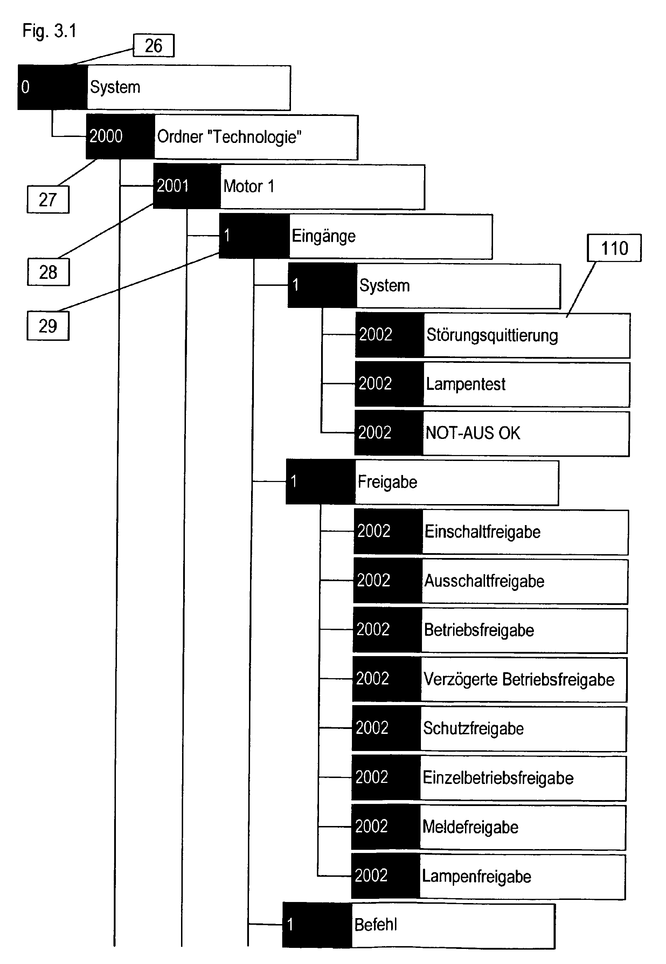

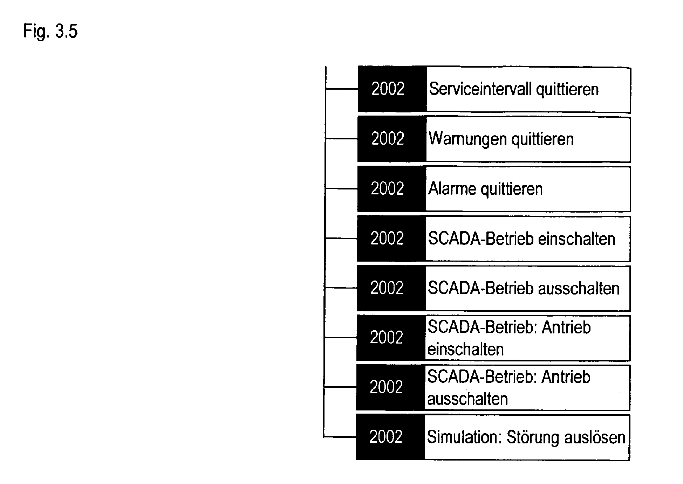

In den Figuren 3.1. bis 3.5. ist ein Projektbaum 26 für eine Struktur am Beispiel eines Antriebs gezeigt. Die Figuren 3.1. bis 3.5. beziehen sich auf ein und denselben Projektbaum 26 und sind übereinander angeordnet zu interpretieren, wobei die Figur 3.1. zu oberst und die Figur 3.5. zu unterst anzuordnen ist. Aus Figur 3.1. ist ersichtlich, dass die Struktur des Antriebs in die Oberkategorie "Technologie" 27 eingeordnet ist.

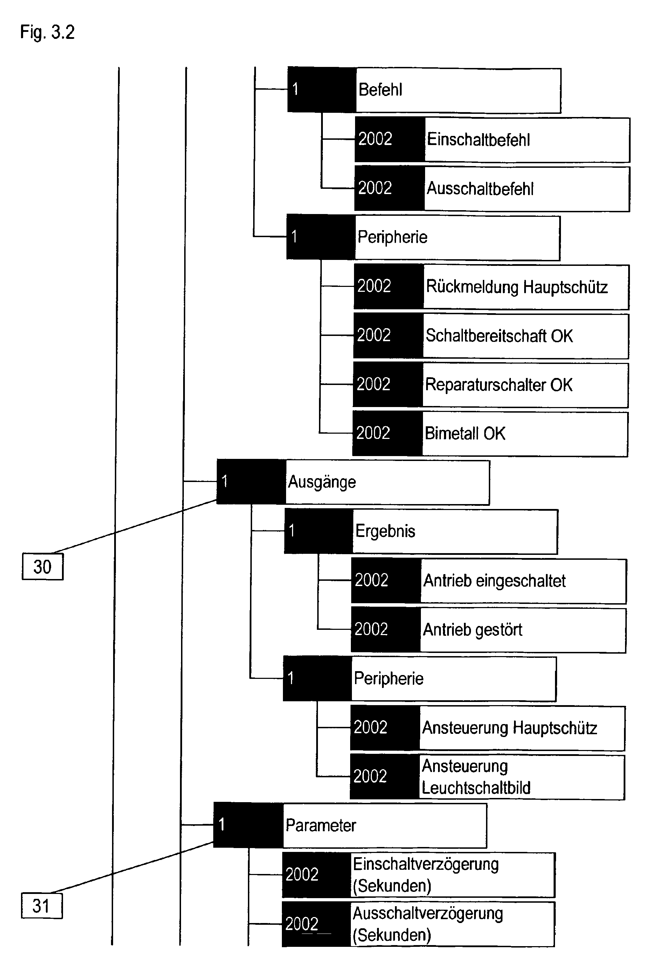

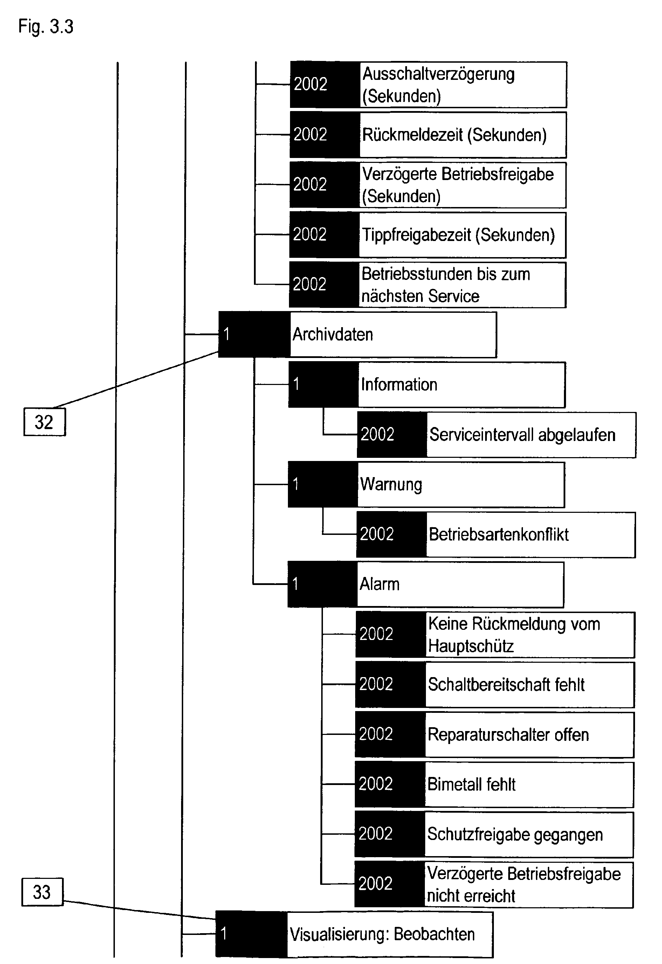

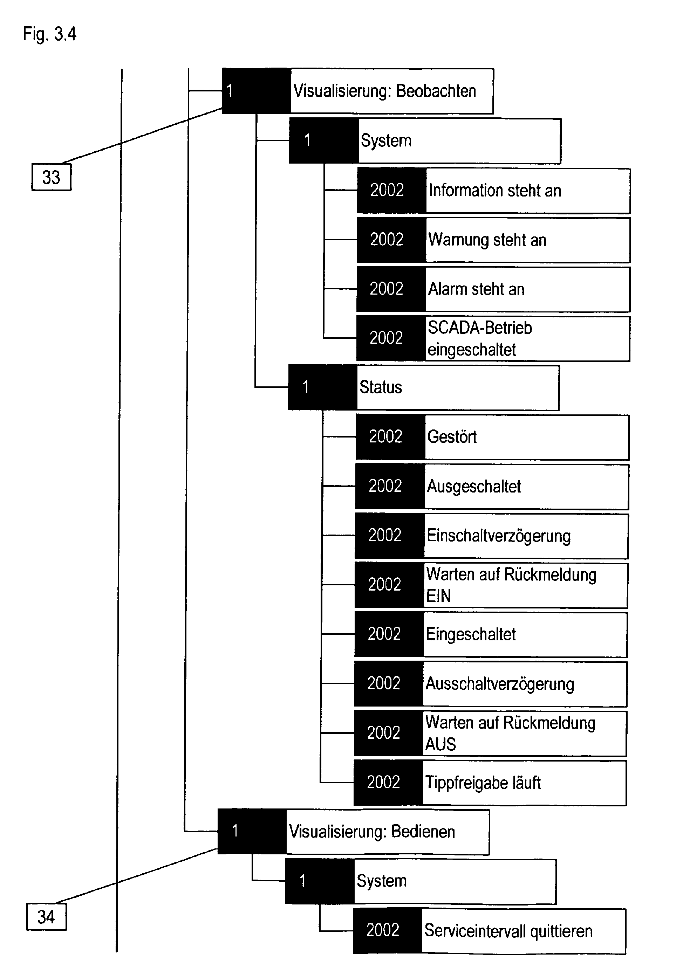

Weiter ist zu erkennen, dass der Projektbaum 26 Technologiedaten 28 für einen Motor_1 enthält. Hierarchisch geordnet erhalten die Technologiedaten 28 für den Motor_1 Daten über Eingänge 29, Ausgänge 30 (vgl. Figur 3.2.), Parameter 31, Archivdaten 32 (vgl. Figur 3.3.), einen Visualisierungsmodus 33 (dieser ist zur besseren Übersichtlichkeit auf der Figur 3.4. wiederholt), Bedienmodi 34.

Zu den Eingängen 29 des Motors_1 28 zählen eine Störungsquittierung, ein Lampentest sowie ein Not-Aus-OK. Freigabewerte, die ebenfalls als Eingang 29 des Motors 28 definiert sind, umfassen Befehle für Einschaltfreigabe, Ausschaltfreigabe, Betriebsfreigabe, verzögerte Betriebsfreigabe, Schutzfreigabe, Einzelbetriebsfreigabe, Meldefreigabe sowie Lampenfreigabe. Ferner umfassen Eingangsbefehle als Untergruppe der Eingänge 29 einen Einschaltbefehl und einen Ausschaltbefehl. Zu den Eingängen 29 aus der Peripherie zählen gemäß Figur 3.2. eine Rückmeldung des Hauptschütz, ein Schaltbereitschafts-OK-Signal, ein Reparaturschalter-OK-Signal sowie ein Bimetall-Ok-Signal.

Zu den Ausgängen 30 des Motors 28 innerhalb der Struktur 26 des Antriebs zählen Werte für Einschaltverzögerung bzw. Ausschaltverzögerung in Sekunden(vgl. Figur 3.2) sowie eine Rückmeldezeit, verzögerte Betriebsfreigabezeit, Tippfreigabezeit, jeweils in Sekunden, sowie die Betriebsstunden bis zum nächsten Service.

Zu den Archivdaten 32, die innerhalb der Struktur 26 dem Motor_1 28 des Antriebs zugeordnet sind, zählen Informationen über den Ablauf eines Serviceintervalls, Warnungen über einen Betriebsartenkonflikt sowie Alarme folgenden Inhalts:
- keine Rückmeldung vom Hauptschütz
- Schaltbereitschaft fehlt
- Reparaturschalter offen
- Bimetall fehlt
- Schutzfreigabe gegangen
- verzögerte Betriebsfreigabe nicht erreicht

Zu den Visualisierungsmodi 33 zählen in Bezug auf das System Daten darüber, ob eine Information ansteht, eine Warnung ansteht, ein Alarm ansteht und ob ein SCADA-Betrieb eingeschaltet ist. Zu den Statusmeldungen in dieser Kategorie zählen folgende Statusmeldungen:
- gestört
- ausgeschaltet
- Einschaltverzögerung
- Warten auf Rückmeldung EIN
- eingeschaltet
- Ausschaltverzögerung
- Warten auf Rückmeldung AUS
- Tippfreigabe läuft.

Zu den Bedienmodi 34 zählen gemäß Figuren 3.4. und 3.5. folgende Bedienbefehle:
- Serviceintervall quittieren
- Warnungen quittieren
- Alarme quittieren
- SCADA-Betrieb einschalten
- SCADA-Betrieb ausschalten
- SCADA-Betrieb: Antrieb einschalten
- SCADA-Betrieb: Antrieb ausschalten
- Simulation: Störung auslösen.

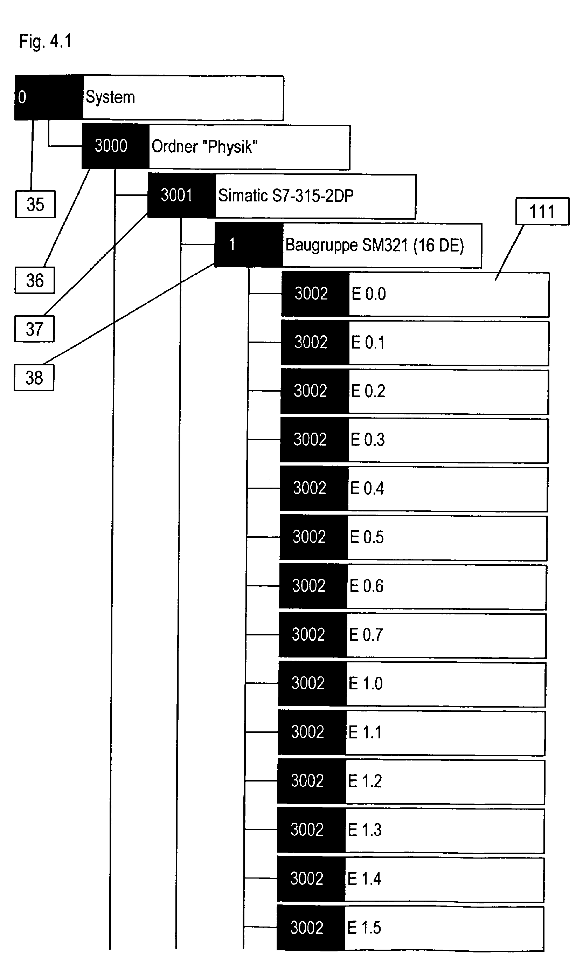

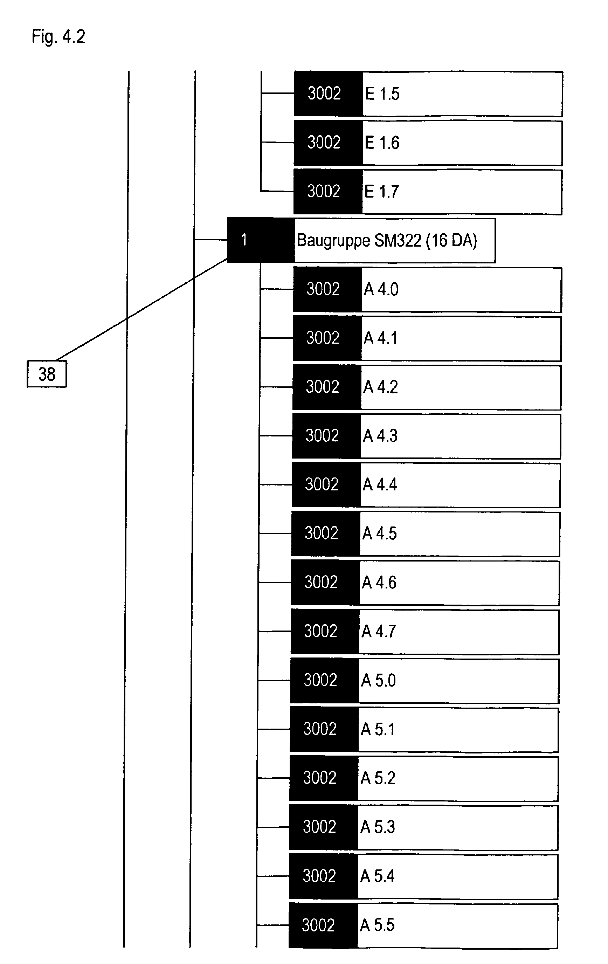

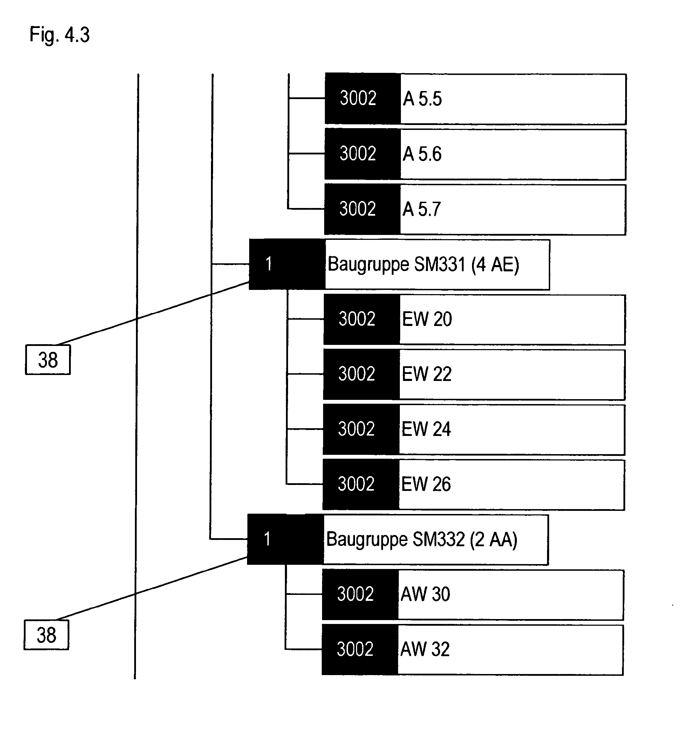

Die Figuren 4.1. zeigen beispielhaft einen Projektbaum 35 zur Verknüpfung mit der SPS 2. Der Zusammenhang der Figuren 4.1. bis 4.3. ist analog zu jenen der Figuren 3.1. bis 3.5. zu interpretieren. Die Figuren sind also übereinander angeordnet aufzufassen.

Wie zu erkennen in Figur 4.1, ist die Struktur 35 des Projektbaums der SPS 2 der Ordnerkategorie 36 "Physik" zugeordnet. In diesem Ordner werden gemäß diesem Ausführungsbeispiel Parameter abgelegt, die von der SPS 2 ausgelesen werden können. Innerhalb der Ordnerkategorie 36 für Physik sind Technologiedaten 37 einer beispielhaften SPS 2 mit der Bezeichnung "Simatic S7-315-2DP" abgelegt. Für diese Simatic SPS sind für vier verschiedene Baugruppen 38 dort auslesbare Parameter E 0.0 ... E 1.7 bzw. A 4.0 ... A 5.7 bzw. EW20 ... EW 26 bzw. AW 30 ... AW 32 definiert.

Mit Bezug auf die Figur 2 ist nun veranschaulicht, wie eine Zuordnung einer der vordefinierten Projektbäume 26, 35 innerhalb der Strukturdatenbank 22 zu einem kompatiblen Datenkanal gemäß der Kanaltyptabelle 21 erfolgt. Hierdurch ist erfindungsgemäß sichergestellt, dass nur zueinander vom Datenformat her kompatible Daten zugeordnet werden. Darüber hinaus werden von den externen Einheiten, also der SPS 2 und der Datenbank 3, nur die vorher definierten Werte ausgelesen und abgefragt. Die Verarbeitung der Signale ist erfindungsgemäß unabhängig davon, ob die Quelle die SPS 2 oder die Datenbank 3 ist.

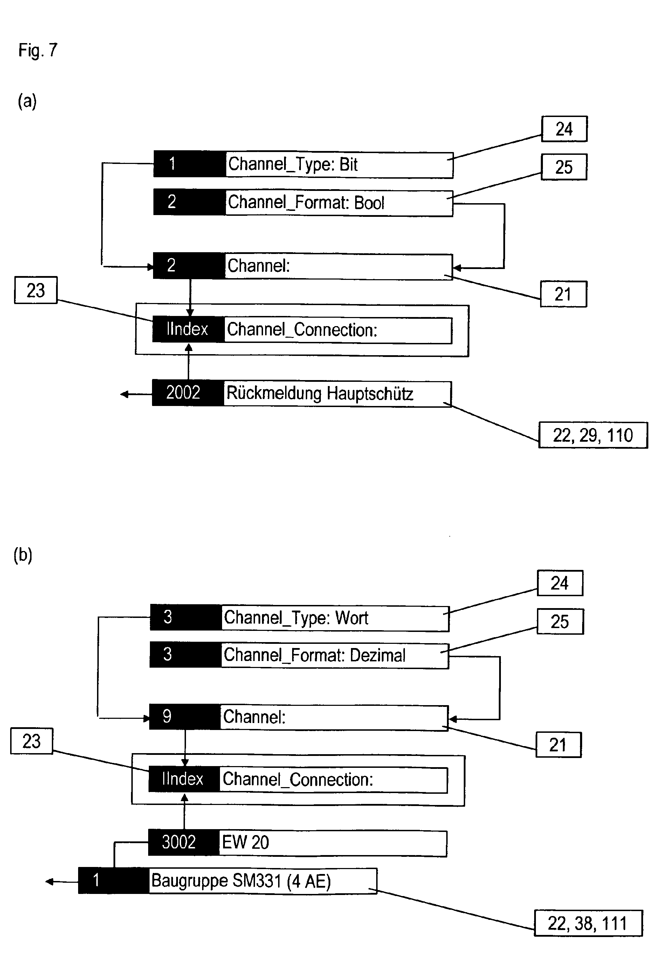

In Figur 7 ist der Vorgang der Zuordnung eines Datenkanals zu einer Struktur gemäß Figur 2(a) und 2b zusätzlich grafisch veranschaulicht. In Figur 7(a) ist diese Zuordnung am Beispiel eines technologischen Parameters gezeigt. Im Einzelnen wird der Parameter "Rückmeldung Hauptschütz" in dem Peripherieordner der Eingänge 29 des Ordners für Technologiedaten 28 auf der Figur 3.2. mit einem passenden Kanal verbunden.

Dazu ist aus der Kanaltypdatenbank 24 das Element BIT und aus der Kanalformatdatenbank 25 das Element BOOL als Kombination in der Kanaltyptabelle 21 ausgewählt, um einen Kanaltyp BIT mit dem Format BOOL zu bezeichnen. Dieser Kanal hat gemäß Figur 2(b) den Index 2 innerhalb der Kanaltyptabelle 21. Dieser Kanal 2 der Kanaltyptabelle 21 ist nun in der Kanalverbindungstabelle 23 mit dem Parameter "Rückmeldung Hauptschütz" des entsprechenden Strukturelements der entsprechenden Strukturdatenbank 22 verknüpft. Dies bedeutet, dass einer aus einem externen Datensystem als Eingang ausgelesenen Meldung "Rückmeldung Hauptschütz" im Format Bool der entsprechende Datenkanal aus der Kanaltyptabelle 21 zugeordnet wird. Eine ordnungsgemäße Zuordnung und Auswertung des Parameters "Rückmeldung Hauptschütz" im Überwachungssystem 1 der Erfindung ist somit sichergestellt.

In entsprechender Weise ist in Figur 7b beispielhaft gezeigt, wie innerhalb der Kanalverbindungstabelle 23 ein Parameter EW 20 der Baugruppe SM331 gemäß der Struktur 35 aus den Figuren 4.1. bis 4.3 einem Kanal vom Typ Wort im Format dezimal zugeordnet wird.

Es handelt sich bei dem Kanal somit um ein Wort, diesen Wert als Dezimalzahl angezeigt werden soll.

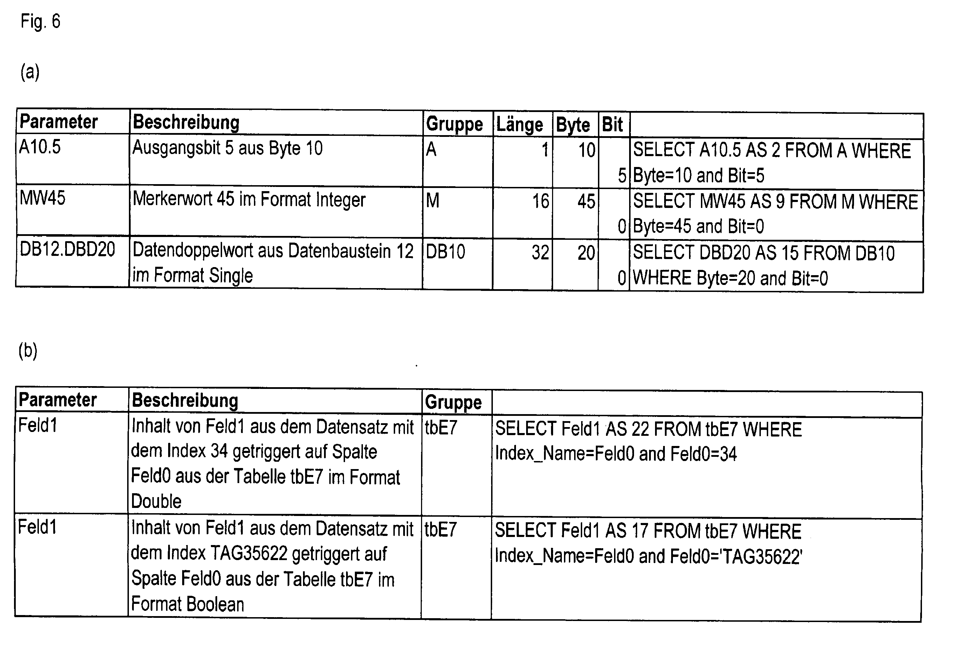

In der Figur 6 ist anhand zweier Beispiele erläutert, wie gemäß der Erfindung unter Einsatz des erfindungsgemäßen Verfahrens bzw. durch die erfindungsgemäße Steuerung eine Adressierung von Speicherbereichen externer Einheiten in vereinheitlichter Form erfolgt. Gemäß Figur 6a ist die Adressierung von Parametern der SPS 2 tabellarisch veranschaulicht. Zum Auslesen eines Parameters A 10.5 (vgl. auch die Struktur 35), welcher das Ausgangsbit Nummer 5 aus Byte Nummer 10 betrifft, und welcher der Gruppe A angehört, der eine Länge 1 aufweist, dient der SQL-Befehl:
SELECT A 10.5 AS 2 FROM A WHERE Byte=10 and Bit=5

Außer der hier beispielhaft erläuterten Verwendung von SQL können beispielsweise auch SQL-ähnliche Sprachen verwendet werden.

Analog wird der Parameter MW 45, der das Merkerwort 45 im Format Integer enthält, mit dem achtstelligen SQL-Befehl ausgelesen.
SELECT MW45 AS 9 FROM M WHERE Byte=45 and Bit=0

Schließlich wird, wie in Spalte 3 der Tabelle gemäß Figur 6a gezeigt, der Parameter DB12.DBD20, also ein Datendoppelwort aus Datenbaustein 12 im Format Single, mit dem SQL-Befehl, der nachstehend wiedergegeben ist, ausgelesen:
SELECT DBD20 AS 15 FROM DB10 WHERE Byte=20 and Bit=0

In Figur 6(a) ist tabellarisch anhand zweier Beispiele die Adressierung von Parametern aus der Datenbank 3, die an das erfindungsgemäße Überwachungssystem 1 angeschlossen ist, veranschaulicht. Zum Auslesen des Parameters "Feld1", welcher also den Inhalt des Feldes 1 aus dem Datensatz mit dem Index 34, getriggert auf Spalte Feld0 aus der Tabelle tbE7 im Format Double betrifft, dient der SQL-Befehl:
SELECT Feld1 AS 22 FROM tbE7 WHERE
Index_Name=Feld0 and Feld0=34

Ebenso dient zum Auslesen des Inhalts von Feld1 aus dem Datensatz mit dem Index TAG35622, getriggert auf Spalte Feld0 aus der Tabelle tbE7 im Format Boolean der SQL-Befehl:
Select Feld1 AS 22 FROM tbE7 WHERE
Index_Name=Feld0 and Feld0='TAG35622'.

Man erkennt somit, dass die Adressierung der Datenbank 3 völlig nach der gleichen Syntax wie die Adressierung der SPS 2 abläuft. Dies ist dank der in der Projektdatenbank 13 abgelegten Strukturdatenbank 22 und deren Verknüpfung mit der Kanaltyptabelle 21 in der Kanalverbindungsdatenbank 23 möglich. Dabei wurde berücksichtigt, dass eine Adresse eines Parameters innerhalb einer speicherprogrammierbaren Steuerung (SPS) folgendermaßen aufgebaut ist: Gruppe, Länge, Byte, Bit.

Allgemein ist die einheitliche Syntax, die erfindungsgemäß zur Adressierung von Speicherbereichen verschiedenster angeschlossener Geräte verwendet wird, wie folgt:
SELECT *Cell* Format_*ID* FROM Page WHERE.

*Cell* steht dabei für den Namen des Parameters, *Format_ID* für die Kombination aus Typ und Format, der sich aus dem eindeutigen Relationsindex ergibt, *Page* für den Bereich, die Gruppe oder Tabelle, in dem der Parameter liegt, sowie *Rule* für die Regel, wie der Parameter eindeutig auf der Page zu adressieren ist.

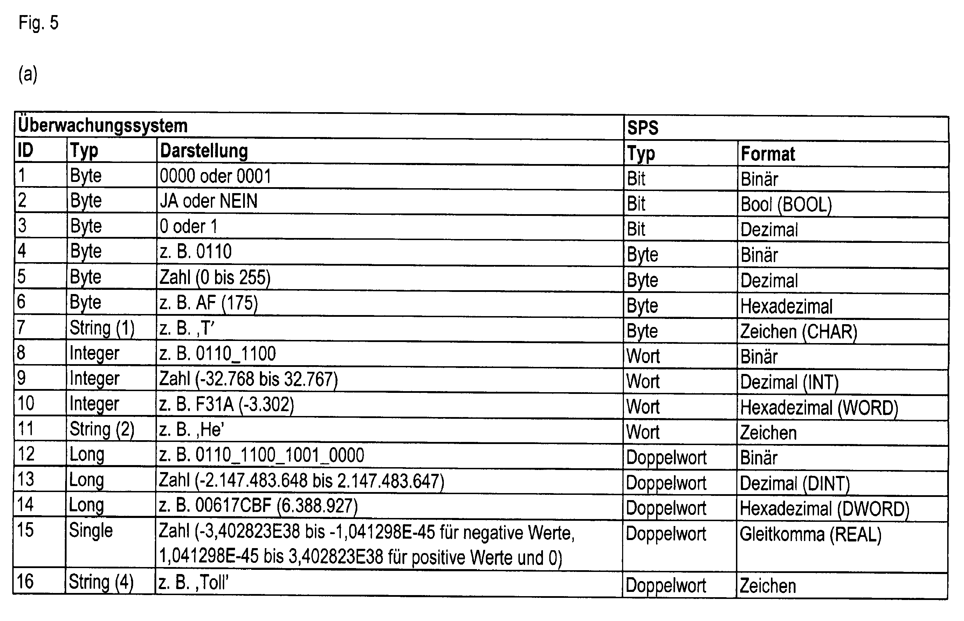

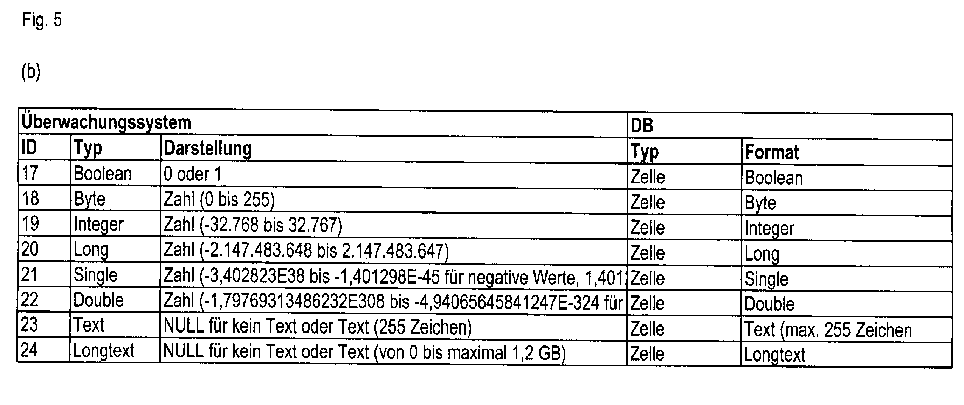

In Figur 5 ist schließlich eine Tabelle angegeben, welche Auskunft darüber gibt, welche Parametertypen und Formate mit dem erfindungsgemäßen System und Verfahren mit externen Geräten verbunden werden können, gemäß einem bevorzugten Ausführungsbeispiel.

In Figur 5a ist die entsprechende Übersicht bezogen auf die SPS 2 dargestellt. Die Verbindungsparameter auf Seiten des erfindungsgemäßen Überwachungssystems 1 betreffen in der Tabelle die ersten drei Spalten, also die Spalten 'Datentyp', 'Datenformat', ,Darstellung'. Die rechten beiden Spalten, also Spalten 4 und 5, betreffen Typ und Format des jeweiligen externen Gerätes.

In Figur 5a handelt es sich bei dem externen Gerät um die SPS 2. In Spalte Index ist die eindeutige Kanalnummer gemäß der Kanaldefinitionstabelle 21 angegeben. In Spalte 2 der Datentyp, in Spalte 3 die Darstellung innerhalb des Überwachungssystems 1. Spalten 4 und 5 beschreiben Typ und Format der verknüpften SPS-Parameter.

Figur 5(b) zeigt die Tabelle analog zu Figur 5(a). Abweichend von der Figur 5(a) zeigt die Tabelle in Figur 5(b) die Definition bei der Übersetzung von Formaten des erfindungsgemäßen Überwachungssystems mit der Datenbank 3.

Somit ist gemäß der Erfindung ein System und Verfahren zur Überwachung, Steuerung und Datenerfassung technischer Prozesse vorgeschlagen, welche eine vereinheitlichte Überwachung und Auswertung von externen Geräten ermöglicht. Externe Geräte können dabei sowohl speicherprogrammierbare Steuerung (SPS) als auch externe Datenbanken sein. Die gleichzeitige Überwachung von Datenbanken und SPS mit demselben System 1 ist nach der Erfindung problemlos möglich.

Ein Datenaustausch mit den externen Datenbanken und SPS ist bidirektional möglich. Das System ist in der Lage, über den Blackberry-Dienst mit mobilen Blackberry-Clients bidirektional zu kommunizieren. Somit ist es im Rahmen der Erfindung möglich, eine technische Anlage an einem entfernten Ort über einen mobilen Blackberry-Client sowohl zu steuern als auch zu überwachen. Der Blackberry-Client kann dabei sowohl auf Daten aus externen Datenbanken als auch auf die Parameter, welche von externen SPS ausgelesen werden, zugreifen.

### BEZUGSZEICHENLISTE

- 1: Überwachungssystem
- 2: Speicherprogrammierbare Steuerung (SPS)
- 3: Datenbank
- 4: Blackberry-Dienst
- 5: Anlagennetzwerk ProfiNET
- 6: TCP/IP Dienst
- 7: Kommunikationsserver
- 8: Datenbankanwendung
- 9: SQL-Server
- 10: Trend-Server
- 11: Notification Server
- 12: interne Schnittstelle
- 13: Projektdatenbank
- 14: Meldung
- 15: Device-Manager-Dienst
- 16: Blackberry-Client
- 17: PUSH-Dienst
- 18: Projektmanager-Dienst
- 19: Systemmanager-Dienst
- 20: System-Datenbank
- 21: Kanaltyptabelle
- 22: Strukturdatenbank
- 23: Kanalverbindungsdatenbank
- 24: Datentyp
- 25: Datenformat
- 26: Projektbaum Datenbank
- 27: Unterordner in der Projektstruktur zur Aufnahme technologischer Zusammenhänge
- 28: Technologiedaten
- 29: Eingänge
- 30: Ausgänge
- 31: Parameter
- 32: Archivdaten
- 33: Visualisierungsmodus
- 34: Bedienmodi
- 35: Projektbaum SPS
- 36: Unterordner in der Projektstruktur zur Aufnahme physikalischer Zusammenhänge (hardware)
- 37: Technologiedaten
- 38: Unterordner, der die physikalische Einheit 37 aufgliedert in Baugruppen
- 100: Auflistung der verwendbaren Verbindungsprotokolle für die Kommunikation mit externen Geräten
- 101: Auflistung der verwendbaren Prozeßverbindungstypen
- 102: Auflistung der verwendbaren Kanalbereiche und/oder Speicherbereiche
- 104: Verbindungstabelle, in der die verwendbaren Kombinationen aus Typ und Protokoll einer Prozeßverbindung definiert sind
- 105: gültige Speicherbereiche einer Prozeßverbindung, die bei der konkreten Adressierung eines Parameters oder Peripheriekanals zur Prüfung der Verfügbarkeit verwendet werden
- 106: Verbindungstabelle, in der den verwendbaren Kombinationen aus Typ und Protokoll von Prozeßverbindungen deren gültige Speicherbereiche zugewiesen werden
- 107: konkrete Adresse einer Prozeßverbindung
- 108: Verbindungstabelle zwischen dem technologischen Kanal und einer konkreten Adresse einer Prozeßfunktion
- 110: Parameter (Datenklasse 2002), dem ein Kanaltyp 23 zugewiesen werden kann
- 111: Peripheriekanal (Datenklasse 3002), dem ein Kanaltyp 23 zugewiesen werden kann

## Patentansprüche

1. System (1) zur Überwachung, Steuerung und Datenerfassung technischer Prozesse, mit mindestens einer Kommunikationseinheit (12) als Schnittstelle zum bidirektionalen Datenaustausch mit externen Einheiten (2, 3), **dadurch gekennzeichnet, dass** mindestens eine Kommunikationseinheit (12) zur Kommunikation mit mindestens einer externen elektronischen Prozeßdatenbasis (3) und mindestens eine Kommunikationseinheit (12) zur Kommunikation mit mindestens einer externen technischen Steuereinheiten (2) ausgebildet ist.

2. System (1) nach Anspruch 1,**dadurch gekennzeichnet, dass** die Kommunikationseinheit (12) zur Adressierung jeder externen Einheit (2, 3) mittels einer eineindeutigen Kennung ausgebildet ist, wobei Kennungen für Prozeßdatenbasen (3) auf deren Primärschlüssel und Kennungen für Steuereinheiten (2) auf eine Speicheradresse verweisend ausgebildet sind.

3. System (1) nach Anspruch 1 oder 2, **dadurch gekennzeichnet, dass** eine Kommunikationskanaldatenbasis (21, 24, 25, 102, 104, 105, 106, 107) vorhanden ist, in welcher Kennungen für die Kommunikation mit externen Einheiten (2, 3) abgelegt sind.

4. System (1) nach einem der vorhergehenden Ansprüche, **dadurch gekennzeichnet, dass** die Kommunikationseinheit (12) zur Adressierung von Speicherbereichen auf externen Einheiten (2, 3) nach einem für alle externen Einheiten (2, 3) einheitlichen Format, insbesondere SQL-Format, ausgebildet ist.

5. System (1) nach einem der vorhergehenden Ansprüche, **dadurch gekennzeichnet, dass** eine Datenstruktur-Datenbasis (22) vorhanden ist, in welcher Datenstrukturen (26, 27, 28, 29, 35, 36, 37, 38) mit dem System verbindbarer externer Einheiten (2, 3) abgelegt sind.

6. System (1) nach einem der vorhergehenden Ansprüche, **dadurch gekennzeichnet, dass** Mittel zur Überprüfung einer Datenkompatibilität, insbesondere hinsichtlich eines Datenformats und/oder einer Datenbreite, zwischen Elementen der Datenstruktur-Datenbasis (22) und Elementen der Kommunikationskanaldatenbasis (21, 24, 25, 102, 104, 105, 106, 107) vorgesehen sind.

7. System (1) nach einem der vorhergehenden Ansprüche, **dadurch gekennzeichnet, dass** eine Verbindungsdatenbasis (23) vorhanden ist, in welcher gewünschte kompatible Paarungen von Elementen der Datenstruktur-Datenbasis (22) und Elementen der Kommunikationskanaldatenbasis (21, 24, 25, 102, 104, 105, 106, 107) abgelegt sind.

8. System (1) nach einem der vorhergehenden Ansprüche, **dadurch gekennzeichnet, dass** eine Verknüpfungsdatenbank zum Ablegen von Verknüpfungen zwischen Prozessdaten aus einer Prozeßdatenbasis (3) und Messdaten aus einer technischen Steuereinheit (2) zum Zwecke der Visualisierung besagter Daten vorgesehen ist.

9. Verfahren zur Überwachung, Steuerung und Datenerfassung technischer Prozesse mittels bidirektionalem Datenaustausch mit externen Einheiten (2, 3), **dadurch gekennzeichnet, dass** ein Datenaustausch mit mindestens einer externen elektronischen Prozeßdatenbasis (3) und mindestens einer externen technischen Steuereinheit (2) durchgeführt wird.

10. Verfahren nach Anspruch 9, **dadurch gekennzeichnet, dass** jede externe Einheit (2, 3) mittels einer eineindeutigen Kennung adressiert wird, wobei Kennungen für Prozeßdatenbasen (3) aus deren Primärschlüssel und Kennungen für Steuereinheiten (2) aus einer Speicheradresse gebildet werden.

11. Verfahren nach Anspruch 9 oder 10, **dadurch gekennzeichnet, dass** Kennungen für den Datenaustausch mit externen Einheiten (2, 3) vor Beginn der Überwachung, Steuerung und Datenerfassung in einer Kommunikationskanaldatenbasis (21, 24, 25, 102, 104, 105, 106, 107) abgelegt werden.

12. Verfahren nach einem der Ansprüche 9 bis 11, **dadurch gekennzeichnet, dass** Speicherbereiche auf externen Einheiten (2, 3) nach einem für alle externen Einheiten (2, 3) einheitlichen Format, insbesondere SQL-Format, adressiert werden.

13. Verfahren nach einem der Ansprüche 9 bis 12, **dadurch gekennzeichnet, dass** vor jedem Datenaustausch mindestens eine Datenstruktur (26, 27, 28, 29, 35, 36, 37, 38) mit einem System (1) verbindbarer externer Einheiten (2, 3) aus einer Datenstruktur-Datenbasis (22) ausgelesen und vor jedem Datenaustausch eine Datenkompatibilität, insbesondere hinsichtlich eines Datenformats und/oder einer Datenbreite, zwischen Elementen einer Datenstruktur-Datenbasis (22) und Elementen einer Kommunikationskanaldatenbasis (21, 24, 25, 102, 104, 105, 106, 107) überprüft wird, wobei ein Datenaustausch ausschließlich zwischen kompatiblen Elementen durchgeführt wird.

14. Verfahren nach einem der Ansprüche 9 bis 13, **dadurch gekennzeichnet, dass** Prozessdaten aus mindestens einer externen Prozeßdatenbasis (3) und Messdaten aus mindestens einer externen technischen Steuereinheit (2) ausgelesen werden und zur Visualisierung miteinander verknüpft werden.
